# EUROPEAN PATENT SPECIFICATION

(11) **EP 3 163 543 B1**
(45) Date of publication and mention of the grant of the patent: **26.12.2018**
(21) Application number: 16157319.1
(22) Date of filing: 25.02.2016
(51) Int. Cl.: G08B 13/196

(54) **ALARMING METHOD AND DEVICE**
ALARMIERUNGSVERFAHREN UND -VORRICHTUNG
PROCÉDÉ ET DISPOSITIF D'ALARME

(30) Priority: 28.10.2015 CN 201510711332
(43) Date of publication of application: 03.05.2017
(73) Proprietor: Xiaomi Inc., Beijing 100085 (CN)
(72) Inventor: ZHANG, Tao, Haidian District Beijing 00085 (CN); CHEN, Zhijun, Haidian District Beijing 00085 (CN); WANG, Pingze, Haidian District Beijing 00085 (CN)
(74) Representative: Loustalan, Paul William

(56) References cited:
- WO-A1-2010/024281
- US-A- 6 097 429
- US-B1- 6 985 172
- LIPTON A J ET AL: "Moving target classification and tracking from real-time video", APPLICATIONS OF COMPUTER VISION, 1998. WACV '98. PROCEEDINGS., FOURTH IEEE WORKSHOP ON PRINCETON, NJ, USA 19-21 OCT. 1998, LOS ALAMITOS, CA, USA,IEEE COMPUT. SOC, US, 19 October 1998 (1998-10-19), pages 8-14, XP010315540, DOI: 10.1109/ACV.1998.732851 ISBN: 978-0-8186-8606-1

## Description

### TECHNICAL FIELD

The present disclosure generally relates to the technical field of Internet, and more particularly, to an alarming method and device.

### BACKGROUND

Along with the popularization of cameras, real-time monitoring with a camera becomes more and more popular. When a user is not at home or the user sleeps, a camera may monitor an interior of a room in real time by virtue of a scene change detection technology, and may give an alarm when detecting an abnormal scene change. The scene change detection technology determines the abnormal scene change based on an image currently acquired by the camera and a preset scene model, so that when a certain object which is not dangerous for the user, for example, a pet, walks in the room, the camera is very likely to determine walking of the pet as an abnormal scene change and further to give a false alarm to bother the user. Therefore, there is an urgent need for an alarming method capable of avoiding the false alarm.

US 6,985,172 B1 discloses one such alarming method. Surveillance apparatus and methods effective for detecting incidents are based upon improved image processing techniques applied to infrared and visible light spectrum images in a time sequence are disclosed. The method comprises generating a reference image by removing motion objects from an image of a region of interest. The reference image is compared to an image to be analyzed to detect motion. Detected motion is analyzed and classified as motion objects. The motion objects are then compared to a motion model, which classifies the objects as being anticipated or unanticipated. Another alarming method is known from WO2010/024 218 A1.

### SUMMARY

Accordingly, the present invention provides an alarm method and device.

The features of the method and device according to the present disclosure are defined in the independent claims, and the preferable features according to the present invention are defined in the dependent claims, to which the reader is now directed.

In the embodiment of the present disclosure, a server acquires the monitoring video, detects whether the moving target exists in the monitoring video or not, judges whether the moving target is the specified object or not when the moving target exists in the monitoring video, and forbids sending of the alarming information to the terminal when the moving target is the specified object, so that false alarming caused by movement of the specified object is avoided, a false alarm rate is lowered, and alarming accuracy is improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an implementation environment involved in an alarming method, according to an exemplary embodiment.
Fig. 2 is a flow chart showing an alarming method, according to an exemplary embodiment.
Fig. 3 is a flow chart showing another alarming method, according to an exemplary embodiment.
Fig. 4 is a block diagram of an alarming device, according to an exemplary embodiment.
Fig. 5 is a block diagram of a detection module, according to an exemplary embodiment.
Fig. 6 is a block diagram of another detection module, according to an exemplary embodiment.
Fig. 7 is a block diagram of a judgment module, according to an exemplary embodiment.
Fig. 8 is a block diagram of a second determination unit, according to an exemplary embodiment.
Fig. 9 is a block diagram of another alarming device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

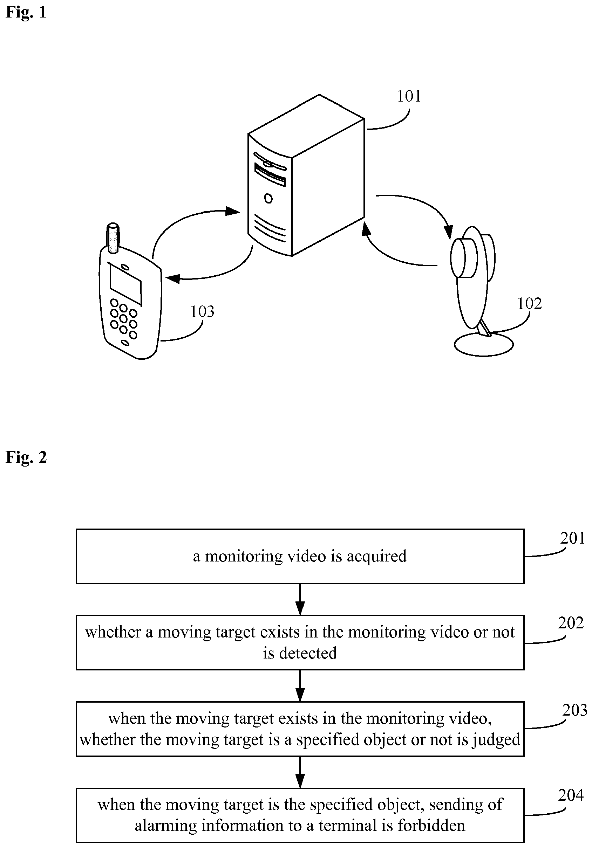

Fig. 1 is a schematic diagram illustrating an implementation environment involved in an alarming method, according to an exemplary embodiment. As shown in Fig. 1, the implementation environment may include: a server 101, an intelligent photographic equipment 102 and a terminal 103. The server 101 may be a server, may also be a server cluster consisting of a plurality of servers, and may further be a cloud computing service center; the intelligent photographic equipment 102 may be an intelligent camera; the terminal 103 may be a mobile phone, a computer, a tablet and the like. The server 101 may be connected with the intelligent photographic equipment 102 through a network, and the server 101 may also be connected with the terminal 103 through the network. The server 101 is configured to receive a monitoring video sent from the intelligent photographic equipment and send alarming information to the terminal. The intelligent photographic equipment 102 is configured to acquire the monitoring video in a monitoring area and send the monitoring video to the server. The terminal 103 is configured to receive the alarming information sent from the server and perform alarming.

Fig. 2 is a flow chart showing an alarming method, according to an exemplary embodiment. As shown in Fig. 2, the method is applied to a server, and includes the following steps:
Step 201: a monitoring video is acquired;
Step 202: whether a moving target exists in the monitoring video or not is detected;
Step 203: when the moving target exists in the monitoring video, whether the moving target is a specified object or not is judged; and
Step 204: when the moving target is the specified object, sending of alarming information to a terminal is forbidden.

In the embodiment of the present disclosure, the server acquires the monitoring video, detects whether the moving target exists in the monitoring video or not, judges whether the moving target is the specified object or not when the moving target exists in the monitoring video, and forbids sending of the alarming information to the terminal when the moving target is the specified object, so that false alarming caused by movement of the specified object is avoided, a false alarm rate is lowered, and alarming accuracy is improved.

In another embodiment of the present disclosure, the detecting whether the moving target exists in the monitoring video or not includes:
for each frame of video image in the monitoring video, a pixel value of each pixel in the video image is acquired;
whether foreground pixels exist in the video image or not is judged based on the pixel value of each pixel and a specified background model; and
when the foreground pixels exist in the video image, it is determined that the moving target exists in the monitoring video, otherwise it is determined that the moving target does not exist in the monitoring video.

Since the specified background model is configured to represent a distribution characteristic of a pixel value of each background pixel in the video image on a time domain, based on the pixel value of each pixel in the video image and the specified background model, whether the foreground pixels exist in the video image or not may be effectively judged, that is, whether the moving target exists in the monitoring video or not may be effectively judged.

In another embodiment of the present disclosure, after it is determined that the moving target does not exist in the monitoring video, the method further includes:
the specified background model is updated based on the pixel value of each pixel in the video image.

Wherein, the updating the specified background model in real time based on the pixel value of each pixel in the video image may endow adaptability to the specified background model, namely to make the specified background model closer and closer to a distribution characteristic of the pixel values of current background pixels on the time domain, thereby improving moving target detection accuracy.

In another embodiment of the present disclosure, the judging whether the moving target is the specified object or not includes:
a type of the moving target is determined based on a specified classification model; and
when the type is a specified type, it is determined that the moving target is the specified object.

Wherein, after the server determines that the moving target exists in the monitoring video, the server may judge whether the moving target is the specified object or not, so as to avoid false alarming caused by the movement of the specified object.

In another embodiment of the present disclosure, the determining the type of the moving target based on the specified classification model includes:
in the video image of the monitoring video, an area where the moving target is located is cut to obtain a target image;
a size of the target image is processed into a preset size; and
the type of the moving target is determined based on the specified classification model and the processed target image.

The specified classification model may usually process an image in the preset size to determine a type of an object included in the image, so that the server cuts the area where the moving target is located to obtain the target image, and processes the size of the target image into the preset size for the specified classification model to conveniently determine the type of the moving target based on the processed target image to improve type determination efficiency.

In another embodiment of the present disclosure, the specified object includes a pet.

Wherein, when the specified object includes the pet, false alarming caused by movement of the pet may be avoided, the false alarm rate is lowered, and the alarming accuracy is improved.

All the above-mentioned optional technical solutions may be freely combined to form optional embodiments of the present disclosure, and will not be elaborated one by one in the embodiment of the present disclosure.

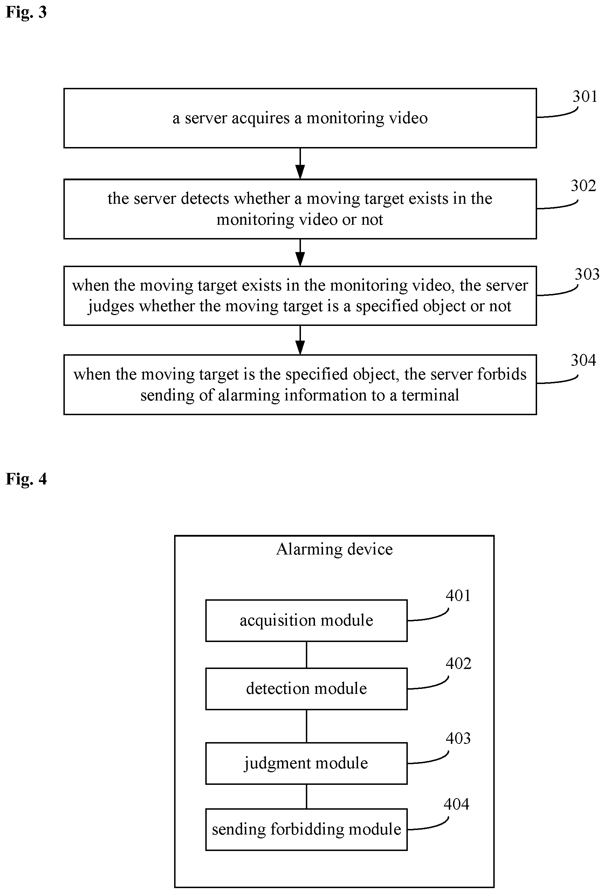

Fig. 3 is a flow chart showing another alarming method, according to an exemplary embodiment. As shown in Fig. 3, the method includes the following steps.

Step 301: a server acquires a monitoring video.

It is important to note that the server may acquire the monitoring video from an intelligent photographic equipment, and of course, the intelligent photographic equipment may also send the monitoring video to other equipment, and then the server may acquire the monitoring video from the other equipment. There are no limits specifically made in the embodiment of the present disclosure.

Wherein, the intelligent photographic equipment is configured to acquire the monitoring video in a monitoring area, and a process of acquiring the monitoring video in the monitoring area by the intelligent photographic equipment may refer to the related art, and will not be elaborated in the embodiment of the present disclosure.

In addition, the intelligent photographic equipment may communicate with the server or the other equipment through a wired network or a wireless network, and when the intelligent photographic equipment communicates with the server or the other equipment through the wireless network, the intelligent photographic equipment may communicate with the server or the other equipment through a built-in Wireless Fidelity (WIFI) communication chip, a BlueTooth (BT) communication chip or another wireless communication chip. There are no limits specifically made in the embodiment of the present disclosure.

Step 302: the server detects whether a moving target exists in the monitoring video or not.

The intelligent photographic equipment is usually fixed, that is, the intelligent photographic equipment acquires a monitoring video in a fixed monitoring area, and then the detecting whether the moving target exists in the monitoring video or not may be implemented by establishing a background model of a background in the fixed monitoring area, thereby comparing each frame of video image in the monitoring video with the background model so as to determine a foreground image in the fixed monitoring area, the foreground image referring to an image of any meaningful moving object under the condition that the background is still.

Therefore, the operation that the server detects whether the moving target exists in the monitoring video or not may be implemented as follows: for each frame of video image in the monitoring video, the server acquires a pixel value of each pixel in the video image, judges whether foreground pixels exist in the video image or not based on the pixel value of each pixel and a specified background model, determines that the moving target exists in the monitoring video when the foreground pixels exist in the video image, otherwise determines that the moving target does not exist in the monitoring video.

Wherein, the specified background model is configured to represent a distribution characteristic of a pixel value of each background pixel in the video image on a time domain, the specified background model may be a mixed Gaussian model, and of course, the specified background model may also be another model. There are no limits specifically made in the embodiment of the present disclosure.

In addition, the specified background model may be pre-established, and for example, the specified background model may be pre-established according to a distribution condition of the pixel value of each pixel in a specified video image of the monitoring video on the time domain. Of course, other manners may also be adopted for establishment of the specified background model. There are no limits specifically made in the embodiment of the present disclosure.

A color characteristic is one of essential characteristics of an image, the color characteristic may be represented by a pixel value of a pixel of the image, and the pixel value refers to a numerical value such as a position, color and brightness of the pixel of the image, so that the server may judge whether the foreground pixels exist in the video image or not based on the pixel value of each pixel in the video image and the specified background model. When the foreground pixels exist in the video image, it is indicated that there is a meaningful moving object in the video image, that is, the moving target exists in the monitoring video.

Wherein, when the server judges whether the foreground pixels exist in the video image or not based on the pixel value of each pixel and the specified background model, the server may match the pixel value of each pixel and the specified background model, determine that the foreground pixels do not exist in the video image when the pixel value of each pixel is successfully matched with the specified background model, or else determine that the foreground pixels exist in the video image, wherein the foreground pixels are pixels corresponding to pixel values which are unsuccessfully matched with the specified background model.

In addition, a process of matching the pixel value of each pixel and the specified background model by the server may refer to the related art, and will not be elaborated in detail in the embodiment of the present disclosure.

Furthermore, after the server determines that the moving target does not exist in the monitoring video, the server may also update the specified background model based on the pixel value of each pixel in the video image.

The specified background model is pre-established by the server, and the background may change under the influence of an unpredictable factor such as a light change and camera vibration. Therefore, for avoiding a moving target detection error of the specified background model due to change accumulation caused by the unpredictable factor, when the server determines that the moving target does not exist in the monitoring video, the server may update the specified background model in real time based on the pixel value of each pixel in the video image so as to make the specified background model adaptive and closer and closer to the distribution characteristic of the pixel values of the current background pixels on a time domain, thereby improving the moving target detection accuracy.

It is important to note that a process of updating the specified background model based on the pixel value of each pixel in the video image by the server may refer to the related art, and will not be elaborated in detail in the embodiment of the present disclosure.

Step 303: when the moving target exists in the monitoring video, the server judges whether the moving target is a specified object or not.

In order to avoid false alarming caused by movement of the specified object, when the server determines that the moving target exists in the monitoring video, the server may judge whether the moving target is the specified object or not. The operation that the server judges whether the moving target is the specified object or not may be implemented as follows: the server may determine a type of the moving target based on a specified classification model, determine that the moving target is the specified object when the type of the moving target is a specified type, or else determine that the moving target is not the specified object.

It is important to note that the specified object is preset, the specified object is an object which is not dangerous for a user, and for example, the specified object may include a pet. Of course, the specified object may also include another article during a practical application, which is not specifically limited in the embodiment of the present disclosure.

In addition, the specified type is a type of the specified object, the specified type corresponds to the specified object one to one, and for example, when the specified object includes the pet, the specified type may include a cat, a dog and the like. There are no limits specifically made in the embodiment of the present disclosure.

For example, when the server determines that the type of the moving target is a cat based on the specified classification model and if the specified type includes a cat and a dog, the type of the moving target is the specified type, and then the server may determine that the moving target is the specified object.

For another example, when the server determines that the type of the moving target is a person based on the specified classification model and if the specified type includes a cat and a dog, the type of the moving target is not the specified type, and then the server determines that the moving target is not the specified object.

Wherein, when the server determines the type of the moving target based on the specified classification model, the server may cut an area where the moving target is located in the video image of the monitoring video to obtain a target image, process a size of the target image into a preset size and determine the type of the moving target based on the specified classification model and the processed target image.

Wherein, when the server cuts the area, where the moving target is located, in the video image of the monitoring video to obtain the target image, the server may intercept an external rectangle of the moving target from the video image where the moving target is located, and determine the external rectangle as an image area, i.e., the target image, where the moving target is located in the monitoring video. Or, the server may also acquire the foreground pixels from the video image where the moving target is located and combine the acquired foreground pixels to obtain the image area, i.e., the target image, where the moving target is located in the monitoring video. Or, the server may also remove the background pixels in the video image where the moving target is located to obtain the image area, i.e., the target image, where the moving target is located in the monitoring video, wherein the background pixels are pixels corresponding to pixel values which are successfully matched with the specified background model.

It is important to note that the specified classification model is configured to determine a type corresponding to an image, the specified classification model does distinguish multiple types, the multiple types include the specified type, the specified classification model may be pre-established, and when the specified classification model is established, the server may acquire sample picture sets corresponding to the multiple types respectively, wherein each sample picture set corresponds to a type, each sample picture in each sample picture set may
include articles of the type corresponding to the sample picture set, and the server may process sizes of the sample pictures in the sample picture sets into the preset size, perform processing in a manner of keeping parameters of a characteristic layer of a preset training model unchanged, partially regulate parameters in a full connection layer of the preset training model by virtue of the processed sample pictures in the sample picture sets and a preset training protocol, and regulate all parameters in a classifier layer of the preset training model to further obtain the specified classification model. Of course, other manners may also be adopted for the server to establish the specified classification model, which is not specifically limited in the embodiment of the present disclosure.

Since the specified classification model may be pre-established, for improving type determination efficiency, the specified classification model may usually process an image in the preset size to determine a type of an object included in the image. Therefore, before determining the type of the moving target, the server is required to cut the area where the moving target is located to obtain the target image and process the size of the target image into the preset size for the specified classification model to conveniently determine the type of the moving target based on the processed target image.

In addition, the preset size may be preset, and for example, the preset size may be a 224*224 pixel, a 300*300 pixel and the like, which is not specifically limited in the embodiment of the present disclosure.

It is important to note that when the server determines the type of the moving target based on the specified classification model and the processed target image, the server does extract a characteristic vector from the target image according to the specified classification model, calculate probability values of probabilities that the target image belongs to the multiple types included in the specified classification model according to the characteristic vector and the specified classification model, and determine the type with the highest probability value as the type of the moving target.

Step 304: when the moving target is the specified object, the server forbids sending of alarming information to a terminal.

The terminal may be connected with the server through the wired network or the wireless network, and when the moving target is the specified object, that is, the moving target is an object which is not dangerous for the user, the server forbids sending of the alarming information to the terminal, thereby avoiding false alarming caused by the movement of the specified object, reducing the false alarm rate and improving the alarming accuracy.

It is important to note that when the server determines that the moving target is not the specified object, the server may also judge whether to send the alarming information to the terminal or not so as to enable the terminal to perform alarming based on a specified alarming strategy.

Wherein, the specified alarming strategy is configured to indicate whether to send the alarming information to the terminal or not when the moving target is not the specified object, the specified alarming strategy may be preset, and for example, the specified alarming strategy may be judging whether the moving target is a person or not and sending the alarming information to the terminal when the moving target is a person. Of course, the specified alarming strategy may include other strategies during a practical application, which is not specifically limited in the embodiment of the present disclosure.

In addition, the alarming information is configured to prompt the user that an abnormal moving target appears in the monitoring area.

Moreover, the terminal may directly play the alarming information through a speaker on the terminal when performing alarming, and of course, other manners may also be adopted for alarming of the terminal, which is not specifically limited in the embodiment of the present disclosure.

In the embodiment of the present disclosure, the server acquires the monitoring video, detects whether the moving target exists in the monitoring video or not, judges whether the moving target is the specified object or not when the moving target exists in the monitoring video, and forbids sending of the alarming information to the terminal when the moving target is the specified object, so that false alarming caused by the movement of the specified object is avoided, the false alarm rate is lowered, and the alarming accuracy is improved.

Fig. 4 is a block diagram of an alarming device, according to an exemplary embodiment. Referring to Fig. 4, the device includes an acquisition module 401, a detection module 402, a judgment module 403 and a sending forbidding module 404.

The acquisition module 401 is configured to acquire a monitoring video;
the detection module 402 is configured to detect whether a moving target exists in the monitoring video or not;
the judgment module 403 is configured, when the moving target exists in the monitoring video, to judge whether the moving target is a specified object or not; and
the sending forbidding module 404 is configured, when the moving target is the specified object, to forbid sending of alarming information to a terminal.

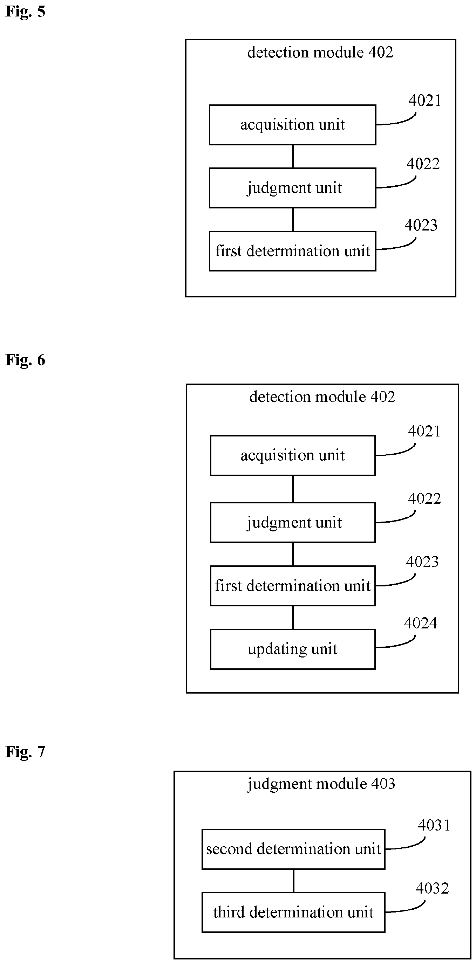

In another embodiment of the present disclosure, referring to Fig. 5, the detection module 402 includes an acquisition unit 4021, a judgment unit 4022 and a first determination unit 4023.

The acquisition unit 4021 is configured, for each frame of video image in the monitoring video, to acquire a pixel value of each pixel in the video image;
the judgment unit 4022 is configured to judge whether foreground pixels exist in the video image or not based on the pixel value of each pixel and a specified background model; and
the first determination unit 4023 is configured, when the foreground pixels exist in the video image, to determine that the moving target exists in the monitoring video, otherwise determine that the moving target does not exist in the monitoring video.

In another embodiment of the present disclosure, referring to Fig. 6, the detection module 402 further includes an updating unit 4024.

The updating unit 4024 is configured to update the specified background model based on the pixel value of each pixel in the video image.

In another embodiment of the present disclosure, referring to Fig. 7, the judgment module 403 includes a second determination unit 4031 and a third determination unit 4032.

The second determination unit 4031 is configured, when the moving target exists in the monitoring video, to determine a type of the moving target based on a specified classification model; and
the third determination unit 4032 is configured, when the type is a specified type, to determine that the moving target is the specified object.

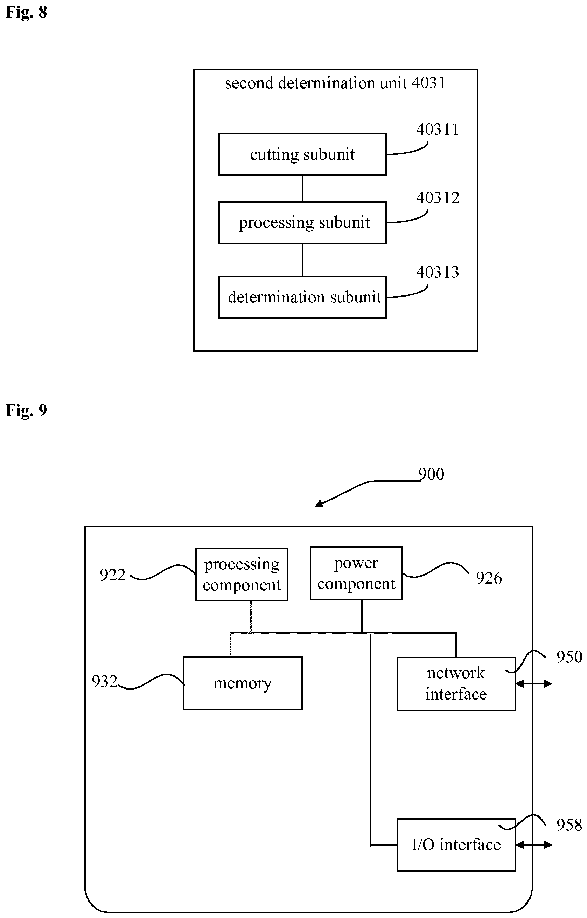

In another embodiment of the present disclosure, referring to Fig. 8, the second determination unit 4031 includes a cutting subunit 40311, a processing subunit 40312 and a determination subunit 40313.

The cutting subunit 40311 is configured, when the moving target exists in the monitoring video, to cut an area, where the moving target is located, in the video image of the monitoring video to obtain a target image;
the processing subunit 40312 is configured to process a size of the target image into a preset size; and
the determination subunit 40313 is configured to determine the type of the moving target based on the specified classification model and the processed target image.

In another embodiment of the present disclosure, the specified object includes a pet.

In the embodiment of the present disclosure, a server acquires the monitoring video, detects whether the moving target exists in the monitoring video or not, judges whether the moving target is the specified object or not when the moving target exists in the monitoring video, and forbids sending of the alarming information to the terminal when the moving target is the specified object, so that false alarming caused by movement of the specified object is avoided, a false alarm rate is lowered, and alarming accuracy is improved.

With respect to the devices in the above embodiments, the specific manners for performing operations for individual modules therein have been described in detail in the embodiments regarding the related methods, which will not be elaborated herein.

Fig. 9 is a block diagram of an alarming device 900, according to an exemplary embodiment. For example, the device 900 may be provided as a server. Referring to Fig. 9, the device 900 includes a processing component 922, which further includes one or more processors, and a memory resource represented by a memory 932, configured to store instructions such as application programs executable for the processing component 922. The application programs stored in the memory 932 may include one or more than one module of which each corresponds to a set of instructions.

The device 900 may further include a power component 926 configured to execute power mangement of the device 900, a wired or wireless network interface 950 configured to connect the device 900 to a network, and an Input/Output (I/O) interface 958. The device 900 may be operated based on an operating system stored in the memory 932, such as Windows ServerTM, Mac OS XTM, UnixTM, LinuxTM, FreeBSDTM and the like.

In addition, the processing component 922 is configured to execute the instructions to execute the following alarming method, wherein the method includes:
a monitoring video is acquired;
whether a moving target exists in the monitoring video or not is detected;
when the moving target exists in the monitoring video, whether the moving target is a specified object or not is judged; and
when the moving target is the specified object, sending of alarming information to a terminal is forbidden.

In another embodiment of the present disclosure, the detecting whether the moving target exists in the monitoring video or not includes:
for each frame of video image in the monitoring video, a pixel value of each pixel in the video image is acquired;
whether foreground pixels exist in the video image or not is judged based on the pixel value of each pixel and a specified background model; and
when the foreground pixels exist in the video image, it is determined that the moving target exists in the monitoring video, otherwise it is determined that the moving target does not exist in the monitoring video.

In another embodiment of the present disclosure, after it is determined that the moving target does not exist in the monitoring video, the method further includes:
the specified background model is updated based on the pixel value of each pixel in the video image.

In another embodiment of the present disclosure, the step that whether the moving target is the specified object or not is judged includes:
a type of the moving target is determined based on a specified classification model; and
when the type is a specified type, it is determined that the moving target is the specified object.

In another embodiment of the present disclosure, the determining the type of the moving target based on the specified classification model includes:
in the video image of the monitoring video, an area where the moving target is located is cut to obtain a target image;
a size of the target image is processed into a preset size; and
the type of the moving target is determined based on the specified classification model and the processed target image.

In another embodiment of the present disclosure, the specified object includes a pet.

In the embodiment of the present disclosure, the server acquires the monitoring video, detects whether the moving target exists in the monitoring video or not, judges whether the moving target is the specified object or not when the moving target exists in the monitoring video, and forbids sending of the alarming information to the terminal when the moving target is the specified object, so that false alarming caused by movement of the specified object is avoided, a false alarm rate is lowered, and alarming accuracy is improved.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

### INDUSTRIAL APPLICABILITY

In an embodiment of the present disclosure, a server acquires a monitoring video, detects whether a moving target exists in the monitoring video or not, judges whether the moving target is a specified object or not when the moving target exists in the monitoring video, and forbids sending of alarming information to a terminal when the moving target is the specified object, so that false alarming caused by movement of the specified object is avoided, a false alarm rate is lowered, and alarming accuracy is improved.

## Claims

1. An alarming method comprising:
acquiring a monitoring video (201);
detecting whether a moving target exists in the monitoring video or not (202); wherein the method further comprises:
upon the moving target exists in the monitoring video, judging whether the moving target is a specified object or not (203); and
when the moving target is the specified object, forbidding the sending of alarm information to a terminal (204);
wherein the step of the judging whether the moving target is the specified object or not comprises:
determining a type of the moving target based on a specified classification model; and
when the type is a specified type, determining that the moving target is the specified object;
wherein the specified object is preset, and the specified object is an object which is not dangerous for a user;
**characterized in that** the step of determining the type of the moving target based on the specified classification model comprises:
in a video image of the monitoring video, cutting an area where the moving target is located to obtain a target image;
processing a size of the target image into a preset size;
extracting a characteristic vector from the target image according to the specified classification model, calculating probabilities of the target image belonging to each of the multiple types included in the specified classification model according to both the characteristic vector and the specified classification model, and determining a type with the highest probability as the type of the moving target;
wherein the specified classification model is configured to distinguish multiple types including the specified type and to determine a type corresponding to the processed target image, and the specified classification model is established by acquiring sample picture sets corresponding to the multiple types respectively

2. The method according to claim 1, wherein the step of detecting whether the moving target exists in the monitoring video or not comprises:
for each frame of video image in the monitoring video, acquiring a pixel value of each pixel in the video image;
judging whether foreground pixels exist in the video image or not based on the pixel value of each pixel and a specified background model; and
when the foreground pixels exist in the video image, determining that the moving target exists in the monitoring video, otherwise determining that the moving target does not exist in the monitoring video;

3. The method according to claim 2, wherein the specified background model is configured to represent a distribution characteristic of a pixel value of each background pixel in the video image on a time domain

4. The method according to claim 2 or 3, further comprising: after determining that the moving target does not exist in the monitoring video,
updating the specified background model based on the pixel value of each pixel in the video image.

5. The method according to claim 1, wherein the step of cutting an area where the moving target is located to obtain a target image comprises:
intercepting an external rectangle of the moving target from the video image where the moving target is located, and determining the external rectangle as an image area where the moving target is located in the monitoring video to obtain the target image; or,
acquiring foreground pixels from the video image where the moving target is located, and combining the acquired foreground pixels to obtain an image area where the moving target is located in the monitoring video as the target image; or,
removing background pixels in the video image where the moving target is located to obtain an image area where the moving target is located in the monitoring video as the target image, wherein the background pixels are pixels corresponding to pixel values which are successfully matched with a specified background model.

6. The method according to any one of claims 1 to 5, wherein the specified object is a pet.

7. An alarm device comprising:
an acquisition module (401), configured to acquire a monitoring video;
a detection module (402), configured to detect whether a moving target exists in the monitoring video or not; wherein the device further comprises:
a judgment module (403), configured, when the moving target exists in the monitoring video, to judge whether the moving target is a specified object or not; and
a sending forbidding module (404), configured, when the moving target is the specified object, to forbid sending of alarm information to a terminal;
wherein the judgment module (403) comprises:
a second determination unit (4031), configured, when the moving target exists in the monitoring video, to determine a type of the moving target based on a specified classification model; and
a third determination unit (4032), configured, when the type is a specified type, to determine that the moving target is the specified object,
wherein the specified object is preset, and the specified object is an object which is not dangerous for a user;
**characterized in that** the second determination unit (4031) comprises:
a cutting subunit (40311), configured, when the moving target exists in the monitoring video, to cut an area, where the moving target is located, in the video image of the monitoring video to obtain a target image;
a processing subunit (40312), configured to process a size of the target image into a preset size; and
a determination subunit (40313), configured to extract a characteristic vector from the target image according to the specified classification model, calculate probabilities of the target image belonging to each of the multiple types included in the specified classification model according to both the characteristic vector and the specified classification model, and determine a type with the highest probability as the type of the moving target;
wherein the specified classification model is configured to distinguish multiple types including the specified type and to determine a type corresponding to the processed target image, and the specified classification model is established by acquiring sample picture sets corresponding to the multiple types respectively.

8. The device according to claim 7, wherein the detection module (402) comprises:
an acquisition unit (4021), configured, for each frame of video image in the monitoring video, to acquire a pixel value of each pixel in the video image;
a judgment unit (4022), configured to judge whether foreground pixels exist in the video image or not based on the pixel value of each pixel and a specified background model; and
a first determination unit (4023), configured, when the foreground pixels exist in the video image, to determine that the moving target exists in the monitoring video, otherwise determine that the moving target does not exist in the monitoring video.

9. The device according to claim 8, wherein the specified background model is configured to represent a distribution characteristic of a pixel value of each background pixel in the video image on a time domain.

10. The device according to claim 8 or 9, wherein the detection module (402) further comprises:
an updating unit (4024), configured to update the specified background model based on the pixel value of each pixel in the video image.

11. The method according to claim 7, wherein the cutting subunit (40311) is further configured to:
intercept an external rectangle of the moving target from the video image where the moving target is located, and determine the external rectangle as an image area where the moving target is located in the monitoring video to obtain the target image; or,
acquire foreground pixels from the video image where the moving target is located, and combine the acquired foreground pixels to obtain an image area where the moving target is located in the monitoring video as the target image; or,
remove background pixels in the video image where the moving target is located to obtain an image area where the moving target is located in the monitoring video as the target image, wherein the background pixels are pixels corresponding to pixel values which are successfully matched with a specified background model.

12. The device according to any one of claims 7 to 11, wherein the specified object is a pet.

13. A computer program including instructions for executing the steps of an alarming method according to any one of claims 1 to 6 when said program is executed by a computer.

14. A recording medium readable by a computer and having recorded thereon a computer program including instructions for executing the steps of an alarming method according to any one of claims 1 to 6.

## Patentansprüche

1. Alarmierungsverfahren, das Folgendes beinhaltet:
Erfassen eines Überwachungsvideos (201);
Erkennen, ob ein sich bewegendes Ziel in dem Überwachungsvideo vorhanden ist oder nicht (202);
wobei das Verfahren ferner Folgendes beinhaltet:
Beurteilen, wenn das sich bewegende Ziel in dem Überwachungsvideo existiert, ob das sich bewegende Ziel ein spezifiziertes Objekt ist oder nicht (203); und
Unterbinden, wenn das sich bewegende Ziel das spezifizierte Objekt ist, des Sendens von Alarminformationen zu einem Endgerät (204);
wobei der Schritt des Beurteilens, ob das sich bewegende Ziel das spezifizierte Objekt ist oder nicht, Folgendes beinhaltet:
Bestimmen eines Typs des sich bewegenden Ziels auf der Basis eines spezifizierten Klassifizierungsmodells; und
Feststellen, wenn der Typ ein spezifizierter Typ ist, dass das sich bewegende Ziel das spezifizierte Objekt ist;
wobei das spezifizierte Objekt voreingestellt ist und das spezifizierte Objekt ein Objekt ist, das für einen Benutzer nicht gefährlich ist;
**dadurch gekennzeichnet, dass** der Schritt des Bestimmens des Typs des sich bewegenden Ziels auf der Basis des spezifizierten Klassifizierungsmodells Folgendes beinhaltet:
Beschneiden, in einem Videobild des Überwachungsvideos, eines Bereichs, in dem sich das sich bewegende Ziel befindet, um ein Zielbild zu erhalten;
Verarbeiten einer Größe des Zielbildes zu einer voreingestellten Größe;
Extrahieren eines Charakteristikvektors aus dem Zielbild gemäß dem spezifizierten Klassifizierungsmodell, Berechnen von Wahrscheinlichkeiten, dass das Zielbild zu jedem der in dem spezifizierten Klassifizierungsmodell enthaltenen mehreren Typen gehört, gemäß dem Charakteristikvektor und dem spezifizierten Klassifizierungsmodell, und Bestimmen eines Typs mit der höchsten Wahrscheinlichkeit als den Typ des sich bewegenden Ziels;
wobei das spezifizierte Klassifizierungsmodell zum Unterscheiden mehrerer Typen einschließlich des spezifizierten Typs und zum Bestimmen eines Typs entsprechend dem verarbeiteten Zielbild konfiguriert ist, und das spezifizierte Klassifizierungsmodell durch Erfassen von Sample-Bildsätzen jeweils entsprechend den mehreren Typen aufgebaut wird.

2. Verfahren nach Anspruch 1, wobei der Schritt des Erkennens, ob das sich bewegende Ziel in dem Überwachungsvideo vorhanden ist oder nicht, Folgendes beinhaltet:
Erfassen, für jeden Videobild-Frame in dem Überwachungsvideo, eines Pixelwertes jedes Pixels in dem Videobild;
Beurteilen, ob Vordergrundpixel in dem Videobild existieren oder nicht, auf der Basis des Pixelwertes jedes Pixels und eines spezifizierten Hintergrundmodells; und
Feststellen, wenn die Vordergrundpixel in dem Videobild existieren, dass das sich bewegende Ziel in dem Überwachungsvideo existiert, ansonsten Feststellen, dass das sich bewegende Ziel in dem Überwachungsvideo nicht existiert.

3. Verfahren nach Anspruch 2, wobei das spezifizierte Hintergrundmodell zum Repräsentieren einer Verteilungscharakteristik eines Pixelwertes jedes Hintergrundpixels in dem Videobild in einer Zeitdomäne konfiguriert ist.

4. Verfahren nach Anspruch 2 oder 3, das ferner Folgendes beinhaltet: nach dem Feststellen, dass das sich bewegende Ziel in dem Überwachungsvideo nicht existiert,
Aktualisieren des spezifizierten Hintergrundmodells auf der Basis des Pixelwertes jedes Pixels in dem Videobild.

5. Verfahren nach Anspruch 1, wobei der Schritt des Beschneidens eines Bereichs, in dem sich das sich bewegende Ziel befindet, um ein Zielbild zu erhalten, Folgendes beinhaltet:
Abfangen eines externen Rechtecks des sich bewegenden Ziels von dem Videobild, wo sich das sich bewegende Ziel befindet, und Bestimmen des externen Rechtecks als einen Bildbereich, in dem sich das sich bewegende Ziel in dem Überwachungsvideo befindet, um das Zielbild zu erhalten; oder
Erfassen von Vordergrundpixeln von dem Videobild, wo sich das sich bewegende Ziel befindet, und Kombinieren der erfassten Vordergrundpixel, um einen Bildbereich, an dem sich das sich bewegende Ziel in dem Überwachungsbild befindet, als Zielbild zu erhalten; oder
Entfernen von Hintergrundpixeln in dem Videobild, wo sich das sich bewegende Ziel befindet, um einen Bildbereich, an dem sich das sich bewegende Ziel in dem Überwachungsbild befindet, als Zielbild zu erhalten, wobei die Hintergrundpixel Pixel sind, die Pixelwerten entsprechen, die erfolgreich mit einem spezifischen Hintergrundmodell abgeglichen werden.

6. Verfahren nach einem der Ansprüche 1 bis 5, wobei das spezifizierte Objekt ein Haustier ist.

7. Alarmgerät, das Folgendes umfasst:
ein Erfassungsmodul (401), konfiguriert zum Erfassen eines Überwachungsvideos;
ein Erkennungsmodul (402), konfiguriert zum Erkennen, ob ein sich bewegendes Ziel in dem Überwachungsvideo existiert oder nicht; wobei das Gerät ferner Folgendes umfasst:
ein Beurteilungsmodul (403), konfiguriert zum Beurteilen, wenn das sich bewegende Ziel in dem Überwachungsvideo existiert, ob das sich bewegende Ziel ein spezifiziertes Objekt ist oder nicht; und
ein Sendeunterbindungsmodul (404), konfiguriert zum Unterbinden, wenn das sich bewegende Ziel das spezifizierte Objekt ist, des Sendens von Alarminformationen zu einem Endgerät;
wobei das Beurteilungsmodul (403) Folgendes umfasst:
eine zweite Bestimmungseinheit (4031), konfiguriert zum Bestimmen, wenn das sich bewegende Ziel in dem Überwachungsvideo existiert, eines Typs des sich bewegenden Ziels auf der Basis eines spezifizierten Klassifizierungsmodells; und
eine dritte Bestimmungseinheit (4032), konfiguriert zum Bestimmen, wenn der Typ ein spezifizierter Typ ist, dass das sich bewegende Ziel das spezifizierte Objekt ist,
wobei das spezifizierte Objekt voreingestellt ist und das spezifizierte Objekt ein Objekt ist, das für einen Benutzer nicht gefährlich ist;
**dadurch gekennzeichnet, dass** die zweite Bestimmungseinheit (4031) Folgendes umfasst:
eine Beschneidungssubeinheit (40311), konfiguriert zum Beschneiden, wenn das sich bewegende Ziel in dem Überwachungsvideo existiert, eines Bereichs, in dem sich das sich bewegende Ziel befindet, in dem Videobild des Überwachungsvideos, um ein Zielbild zu erhalten;
eine Verarbeitungssubeinheit (40312), konfiguriert zum Verarbeiten einer Größe eines Zielbilds zu einer voreingestellten Größe; und
eine Bestimmungssubeinheit (40313), konfiguriert zum Extrahieren eines Charakteristikvektors von dem Zielbild gemäß dem spezifizierten Klassifizierungsmodell, Berechnen von Wahrscheinlichkeiten, dass das Zielbild zu jedem der mehreren in dem spezifizierten Klassifizierungsmodell enthaltenen Typen gehört, gemäß dem Charakteristikvektor und dem spezifizierten Klassifizierungsmodell, und Bestimmen eines Typs mit der höchsten Wahrscheinlichkeit als den Typ des sich bewegenden Ziels;
wobei das spezifizierte Klassifizierungsmodell zum Unterscheiden mehrerer Typen einschließlich des spezifizierten Typs und zum Bestimmen eines Typs entsprechend dem verarbeiteten Zielbild konfiguriert ist, und das spezifizierte Klassifizierungsmodell durch Erfassen von Sample-Bildsätzen jeweils entsprechend den mehreren Typen eingerichtet wird.

8. Gerät nach Anspruch 7, wobei das Erkennungsmodul (402) Folgendes umfasst:
eine Erfassungseinheit (4021), konfiguriert zum Erfassen, für jeden Videobild-Frame in dem Überwachungsvideo, eines Pixelwertes jedes Pixels in dem Videobild;
eine Beurteilungseinheit (4022), konfiguriert zum Beurteilen, ob Vordergrundpixel in dem Videobild existieren oder nicht, auf der Basis des Pixelwertes jedes Pixels und eines spezifizierten Hintergrundmodells; und
eine erste Bestimmungseinheit (4023), konfiguriert zum Bestimmen, wenn die Vordergrundpixel in dem Videobild existieren, dass das sich bewegende Ziel in dem Überwachungsvideo existiert, ansonsten Bestimmen, dass das sich bewegende Ziel in dem Überwachungsvideo nicht existiert.

9. Gerät nach Anspruch 8, wobei das spezifizierte Hintergrundmodell zum Repräsentieren einer Verteilungscharakteristik eines Pixelwertes jedes Hintergrundpixels in dem Videobild in einer Zeitdomäne konfiguriert ist.

10. Gerät nach Anspruch 8 oder 9, wobei das Erkennungsmodul (402) ferner Folgendes umfasst:
eine Aktualisierungseinheit (4024), konfiguriert zum Aktualisieren des spezifizierten Hintergrundmodells auf der Basis des Pixelwertes jedes Pixels in dem Videobild.

11. Verfahren nach Anspruch 7, wobei die Beschneidungssubeinheit (40311) ferner konfiguriert ist zum:
Abfangen eines externen Rechtecks des sich bewegenden Ziels von dem Videobild, wo sich das sich bewegende Ziel befindet, und Bestimmen des externen Rechtecks als einen Bildbereich, in dem sich das sich bewegende Ziel in dem Überwachungsvideo befindet, um das Zielbild zu erhalten; oder
Erfassen von Vordergrundpixeln von dem Videobild, wo sich das sich bewegende Ziel befindet, und Kombinieren der erfassten Vordergrundpixel, um einen Bildbereich, in dem sich das sich bewegende Ziel in dem Überwachungsvideo befindet, als Zielbild zu erhalten; oder
Entfernen von Hintergrundpixeln in dem Videobild, wo sich das sich bewegende Ziel befindet, um einen Bildbereich, in dem sich das sich bewegende Ziel in dem Überwachungsvideo befindet, als Zielbild zu erhalten, wobei die Hintergrundpixel Pixel entsprechend Pixelwerten sind, die erfolgreich mit einem spezifizierten Hintergrundmodell abgeglichen werden.

12. Gerät nach einem der Ansprüche 7 bis 11, wobei das spezifizierte Objekt ein Haustier ist.

13. Computerprogramm mit Befehlen zum Ausführen der Schritte eines Alarmierungsverfahrens nach einem der Ansprüche 1 bis 6, wenn das genannte Programm von einem Computer ausgeführt wird.

14. Aufzeichnungsmedium, das von einem Computer gelesen werden kann und auf dem ein Computerprogramm mit Befehlen zum Ausführen der Schritte eines Alarmierungsverfahrens nach einem der Ansprüche 1 bis 6 aufgezeichnet ist.

## Revendications

1. Procédé d'alarme comprenant :
l'acquisition d'une vidéo de surveillance (201);
la détection qu'une cible mouvante se trouve ou non dans la vidéo de surveillance (202) ;
le procédé comprenant en outre :
quand la cible mouvante se trouve dans la vidéo de surveillance, le jugement que la cible mouvante est ou non un objet spécifié (203) ; et
quand la cible mouvante est l'objet spécifié, l'interdiction de l'envoi d'informations d'alarme à un terminal (204) ;
dans lequel l'étape du jugement que la cible mouvante est ou non l'objet spécifié comprend :
la détermination d'un type de la cible mouvante en fonction d'un modèle de classification spécifié ;
et
quand le type est un type spécifié, la détermination que la cible mouvante est l'objet spécifié ;
dans lequel l'objet spécifié est prédéfini, et l'objet spécifié est un objet qui n'est pas dangereux pour un utilisateur ;
**caractérisé en ce que** l'étape de détermination du type de la cible mouvante en fonction du modèle de classification spécifié comprend :
dans une image vidéo de la vidéo de surveillance, la découpe d'une zone où se trouve la cible mouvante pour obtenir une image cible ;
le traitement d'une taille de l'image cible en une taille prédéfinie ;
l'extraction d'un vecteur de caractéristique de l'image cible conformément au modèle de classification spécifié, le calcul de probabilités de l'appartenance de l'image cible à chacun des multiples types inclus dans le modèle de classification spécifié conformément à la fois au vecteur de caractéristique et au modèle de classification spécifié, et la détermination d'un type ayant la plus haute probabilité comme étant le type de la cible mouvante ;
dans lequel le modèle de classification spécifié est configuré pour distinguer de multiples types comportant le type spécifié et déterminer un type correspondant à l'image cible traitée, et le modèle de classification spécifié est établi en acquérant des ensembles d'échantillons d'images correspondant aux multiples types respectivement.

2. Procédé selon la revendication 1, dans lequel l'étape de détection que la cible mouvante se trouve ou non dans la vidéo de surveillance comprend :
pour chaque trame d'image vidéo dans la vidéo de surveillance, l'acquisition d'une valeur de pixel de chaque pixel dans l'image vidéo ;
le jugement que des pixels de premier plan se trouvent ou non dans l'image vidéo en fonction de la valeur de pixel de chaque pixel et d'un modèle d'arrière-plan spécifié ; et
quand les pixels de premier plan se trouvent dans l'image vidéo, la détermination que la cible mouvante se trouve dans la vidéo de surveillance, dans le cas contraire la détermination que la cible mouvante ne se trouve pas dans la vidéo de surveillance.

3. Procédé selon la revendication 2, dans lequel le modèle d'arrière-plan spécifié est configuré pour représenter une caractéristique de distribution d'une valeur de pixel de chaque pixel d'arrière-plan dans l'image vidéo dans un domaine temps.

4. Procédé selon la revendication 2 ou 3, comprenant en outre :
après la détermination que la cible mouvante ne se trouve pas dans la vidéo de surveillance, l'actualisation du modèle d'arrière-plan spécifié en fonction de la valeur de pixel de chaque pixel dans l'image vidéo.

5. Procédé selon la revendication 1, dans lequel
l'étape de découpe d'une zone où se trouve la cible mouvante afin d'obtenir une image cible comprend :
l'interception d'un rectangle externe de la cible mouvante à partir de l'image vidéo où se trouve la cible mouvante, et la détermination du rectangle externe comme étant une zone d'image où se trouve la cible mouvante dans la vidéo de surveillance afin d'obtenir l'image cible ; ou,
l'acquisition de pixels de premier plan à partir de l'image vidéo où se trouve la cible mouvante,
et la combinaison des pixels de premier plan acquis afin d'obtenir une zone d'image où se trouve la cible mouvante dans la vidéo de surveillance en tant que l'image cible ; ou,
la suppression de pixels d'arrière-plan dans l'image vidéo où se trouve la cible mouvante afin d'obtenir une zone d'image où se trouve la cible mouvante dans la vidéo de surveillance en tant que l'image cible, dans lequel les pixels d'arrière-plan sont des pixels correspondant à des valeurs de pixels qui concordent avec un modèle d'arrière-plan spécifié.

6. Procédé selon l'une quelconque des revendications 1 à 5, dans lequel l'objet spécifié est un animal domestique.

7. Dispositif d'alarme comprenant :
un module d'acquisition (401), configuré pour acquérir une vidéo de surveillance ;
un module de détection (402), configuré pour détecter qu'une cible mouvante se trouve ou non dans la vidéo de surveillance ; le dispositif comprenant en outre :
un module de jugement (403), configuré, quand la cible mouvante se trouve dans la vidéo de surveillance, juger que la cible mouvante est ou non un objet spécifié ; et
un module d'interdiction d'envoi (404), configuré, quand la cible mouvante est l'objet spécifié, interdire l'envoi d'informations d'alarme à un terminal ;
dans lequel le module de jugement (403) comprend :
une deuxième unité de détermination (4031), configurée, quand la cible mouvante se trouve dans la vidéo de surveillance, pour déterminer un type de la cible mouvante en fonction d'un modèle de classification spécifié ; et
une troisième unité de détermination (4032), configurée, quand le type est un type spécifié, déterminer que la cible mouvante est l'objet spécifié,
dans lequel l'objet spécifié est prédéfini, et l'objet spécifié est un objet qui n'est pas dangereux pour l'utilisateur ;
**caractérisé en ce que** la deuxième unité de détermination (4031) comprend :
une sous-unité de découpe (40311), configurée ; quand la cible mouvante se trouve dans la vidéo de surveillance, découper une zone, où se trouve la cible mouvante, dans l'image vidéo de la vidéo de surveillance afin d'obtenir une image cible ;
une sous-unité de traitement (40312), configurée pour traiter une taille de l'image cible en une taille prédéfinie ; et
une sous-unité de détermination (40313), configurée pour extraire un vecteur de caractéristique à partir de l'image cible conformément au modèle de classification spécifié, calculer des propriétés d'appartenance de l'image cible à chacun des multiples types inclus dans le modèle de classification spécifié conformément à la fois au vecteur de caractéristique et au modèle de classification spécifié, et déterminer un type ayant la plus haute probabilité comme étant le type de la cible mouvante ;
dans lequel le modèle de classification spécifié est configuré pour distinguer de multiples types comportant le type spécifié et déterminer un type correspondant à l'image cible traitée, et le modèle de classification spécifié est établi en acquérant des ensembles d'échantillons d'images correspondant aux multiples types respectivement.

8. Dispositif selon la revendication 7, dans lequel le module de détection (402) comprend :
une unité d'acquisition (4021), configurée, pour chaque trame d'image vidéo dans la vidéo de surveillance, pour acquérir une valeur de pixel de chaque pixel dans l'image vidéo ;
une unité de jugement (4022), configurée pour juger que des pixels de premier plan se trouvent ou non dans l'image vidéo en fonction de la valeur de pixel de chaque pixel et d'un modèle d'arrière-plan spécifié ;
et
une première unité de détermination (4023), configurée, quand les pixels de premier plan se trouvent dans l'image vidéo, déterminer que la cible mouvante se trouve dans la vidéo de surveillance, dans le cas contraire déterminer que la cible mouvante ne se trouve pas dans la vidéo de surveillance.

9. Dispositif selon la revendication 8, dans lequel le modèle d'arrière-plan spécifié est configuré pour représenter une caractéristique de distribution d'une valeur de pixel de chaque pixel d'arrière-plan dans l'image vidéo dans un domaine temps.

10. Dispositif selon la revendication 8 ou 9, dans lequel le module de détection (402) comprend en outre :
une unité d'actualisation (4024), configurée pour actualiser le modèle d'arrière-plan spécifié en fonction de la valeur de pixel de chaque pixel dans l'image vidéo.

11. Procédé selon la revendication 7, dans lequel la sous-unité de découpe (40311) est configurée en outre pour :
intercepter un rectangle externe de la cible mouvante à partir de l'image vidéo où se trouve la cible mouvante, et déterminer le rectangle externe comme étant une zone d'image où se trouve la cible mouvante dans la vidéo de surveillance afin d'obtenir l'image cible ; ou,
acquérir des pixels de premier plan à partir de l'image vidéo où se trouve la cible mouvante, et combiner les pixels de premier plan acquis afin d'obtenir une zone d'image où se trouve la cible mouvante dans la vidéo de surveillance en tant que l'image cible ; ou,
supprimer des pixels d'arrière-plan dans l'image vidéo où se trouve la cible mouvante afin d'obtenir une zone d'image où se trouve la cible mouvante dans la vidéo de surveillance en tant que l'image cible, dans lequel les pixels d'arrière-plan sont des pixels correspondant à des valeurs de pixels qui concordent avec un modèle d'arrière-plan spécifié.

12. Dispositif selon l'une quelconque des revendications 7 à 11, dans lequel l'objet spécifié est un animal domestique.

13. Programme informatique comportant des instructions pour exécuter les étapes d'un procédé d'alarme selon l'une quelconque des revendications 1 à 6 quand ledit programme est exécuté par un ordinateur.

14. Support d'enregistrement lisible par un ordinateur et sur lequel est enregistré un programme informatique comportant des instructions pour exécuter les étapes d'un procédé d'alarme selon l'une quelconque des revendications 1 à 6.
